# EUROPEAN PATENT SPECIFICATION

(11) **EP 3 833 859 B1**
(45) Date of publication and mention of the grant of the patent: **06.03.2024**
(21) Application number: 18758911.4
(22) Date of filing: 10.08.2018
(51) Int. Cl.: F02B 19/12, F02B 19/10

(54) **PRECHAMBER ARRANGEMENT**
VORKAMMERANORDNUNG
AGENCEMENT DE PRÉCHAMBRE

(43) Date of publication of application: 16.06.2021
(73) Proprietor: Wärtsilä Finland Oy, 65170 Vaasa (FI)
(72) Inventor: OJANPERÄ, Ari-Matti, 65100 Vaasa (FI); AHLVIK, Ilari, 65100 Vaasa (FI); CAFARI, Alberto, 34018 Trieste (IT)
(74) Representative: Berggren Oy
(86) International application number: PCT/FI2018/050579
(87) International publication number: WO 2020/030846

(56) References cited:
- WO-A1-2017/064355
- JP-A- 2002 138 842
- US-A- 5 014 656
- US-A- 5 947 076
- US-A1- 2015 040 845

## Description

### Technical field of the invention

The present invention relates to a prechamber arrangement for a piston engine in accordance with the preamble of claim 1.

### Background of the invention

Internal combustion engines can be provided with prechambers, also called as precombustion chambers. In prechamber engines, each cylinder is provided with a prechamber, and part or all of the fuel is introduced into the prechamber. Depending on the engine, the fuel can be self-ignited, or a spark plug or some other device can be used for igniting the fuel. The combustion thus starts in the prechamber, but main part of the combustion takes place in a main combustion chamber outside the prechamber. The prechamber construction is beneficial especially in lean burn engines, where part of the fuel is introduced into the prechamber and part of the fuel is mixed with the air before the intake valves. This kind of arrangement can be used, for instance, in spark ignited gas engines. The gas-air mixture in the prechamber is rich compared to the mixture in the cylinder. The rich mixture in the prechamber is ignited by a spark plug and the flames from the prechamber ignite the mixture in the cylinder.

A disadvantage of prechamber engines is the high temperature in the pre-chamber, which causes, for instance, high temperature corrosion (also called hot corrosion). Especially in gas engines, the prechamber is subject to extreme highpressure gradients and maximum pressures. This sets strict requirements for the spark plugs. A prechamber arrangement for a piston engine is known from WO 2017/064355 A1.

### Summary of the invention

An object of the present invention is to provide an improved prechamber arrangement for a piston engine. The characterizing features of the prechamber arrangement according to the invention are given in the characterizing part of claim 1.

The prechamber arrangement according to the invention comprises a prechamber, which is provided with one or more openings for establishing fluid communication between the prechamber and a main combustion chamber, a spark plug cavity, which is arranged outside the prechamber and in fluid communication with the prechamber, and a spark plug, which is configured to ignite air/fuel mixture and which is arranged at least partly in the spark plug cavity. The arrangement further comprises a shield element, which is separate from the spark plug and separates the spark plug cavity from the prechamber and which is provided with at least one nozzle hole for establishing fluid communication between the prechamber and the spark plug cavity.

The shield element protects the spark plug from the heat of the prechamber. This allows less expensive spark plugs to be used.

According to an embodiment of the invention, the shield element is provided with an external thread and the spark plug cavity is provided with a corresponding internal thread for attaching the shield element to the spark plug cavity.

According to an embodiment of the invention, the spark plug cavity is provided with a shoulder facing away from the prechamber and the shield element is provided with a shoulder configured to be arranged against the shoulder of the spark plug cavity.

According to an embodiment of the invention, the shield element is provided with a shape allowing engagement with a tightening tool.

According to an embodiment of the invention, the shape is arranged on the inner circumference of the shield element.

According to an embodiment of the invention, the shape is arranged on a surface facing away from the prechamber. By arranging the shape for the tightening tool on a surface facing away from the prechamber, the shape of the inner circumference of the shield element can be chosen more freely.

According to an embodiment of the invention, the arrangement comprises a fuel inlet for introducing fuel into the prechamber. The fuel inlet in the prechamber allows richer mixture to be formed in the prechamber.

According to the invention, the arrangement comprises a fuel inlet for introducing fuel into the spark plug cavity. By introducing at least part of the fuel into the spark plug cavity, the spark plug is cooled down.

According to an embodiment of the invention, the spark plug cavity is a cylindrical space.

According to the invention, the free volume of the spark plug cavity between the spark plug and the shield element is 1-20 percent of the volume of the prechamber. The volume can be e.g. 5-15 percent.

According to an embodiment of the invention, the shield element comprises a plurality of nozzle holes.

According to an embodiment of the invention, at least some of the nozzle holes are arranged along the circumference of the shield element.

According to an embodiment of the invention, the combined cross-sectional area of the nozzle holes of the shield element is 3-15 percent of the cross-sectional area of the shield element projected into a plane that is perpendicular to the axial direction of the shield element.

In a piston engine according to the invention, each cylinder of the engine is provided with a prechamber arrangement defined above.

### Brief description of the drawings

Embodiments of the invention are described below in more detail with reference to the accompanying drawings, in which
Fig. 1 shows schematically part of a cylinder head and a cylinder of a piston engine,
Fig. 2 shows a prechamber arrangement according to an embodiment of the invention,
Fig. 3 shows a shield element of the prechamber arrangement of figure 2,
Fig. 4 shows a prechamber arrangement according to another embodiment of the invention,
Fig. 5 shows schematically a top view of a shield element according to an embodiment of the invention,
Fig. 6 shows a shield element according to another embodiment of the invention, and
Fig. 7 shows a shield element according to still another embodiment of the invention.

### Description of embodiments of the invention

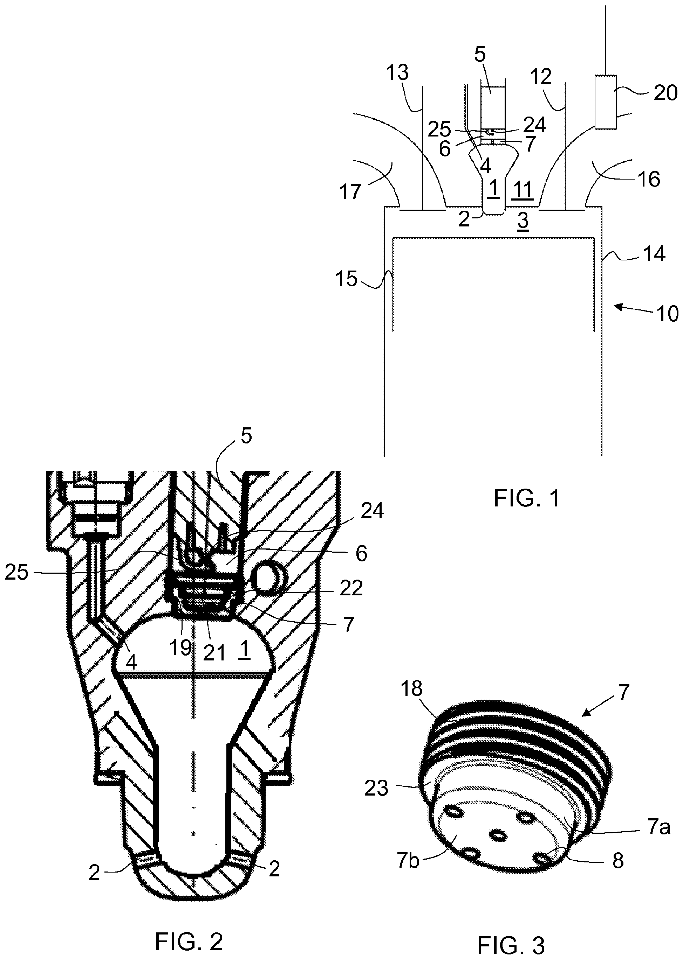

Figure 1 shows schematically part of a cylinder 10 and a cylinder head 11 of a piston engine. The engine is a large internal combustion engine, such as a main or an auxiliary engine of a ship or an engine that is used at a power plant for producing electricity. The cylinder bore of the engine is at least 150 mm. The engine can be for example a spark-ignited gas engine or a dual- or multi-fuel engine. The engine is a multi-cylinder engine comprising a plurality of cylinders 10. The engine is a four-stroke engine. Each cylinder 10 of the engine is provided with a piston 15, which is configured to move in a reciprocation manner within the cylinder 10. The upper end of the cylinder 10 is closed by a cylinder head 11. The expression "upper end" refers here to that end of the cylinder 10 where the piston 15 is at top dead center position. The cylinder 10 does not need to be in a vertical orientation. Each cylinder 10 is provided with an own cylinder head 11.

The walls 14 of the cylinder 10, the piston 15 and the cylinder head 11 delimit a main combustion chamber 3. Each cylinder 10 of the engine is provided with at least one intake valve 12, preferably with two intake valves 12. The intake valves 12 open and close fluid communication between an intake duct 16 and the main combustion chamber 3. Each cylinder 10 is also provided with at least one exhaust valve 13, preferably with two exhaust valves 13. The exhaust valves 13 open and close fluid communication between the main combustion chamber 3 and an exhaust duct 17.

Each cylinder 10 of the engine comprises a prechamber 1. The prechamber 1 is arranged at least partly within the cylinder head 11. The prechamber 1 has a first end and a second end. The first end of the prechamber 1 is a lower end, which may protrude into the main combustion chamber 3. The expression "lower end" refers here to the orientation shown in figures 1, 2 and 4. The cylinder 10 does not need to have a vertical orientation. Major part of the prechamber 1 is located within the cylinder head 11. The first end of the prechamber 1 is provided with at least one opening 2 for establishing fluid communication between the prechamber 1 and the main combustion chamber 3. In the embodiment of the figures, the prechamber 1 comprises a plurality of nozzle holes 2. However, instead of the nozzle holes 2, the prechamber 1 could be provided for example with a circumferential slot surrounding the lower end of the prechamber 1. The prechamber 1 can be formed by a separate prechamber element or by a prechamber assembly that is inserted into the cylinder head 11.

The prechamber arrangement is provided with a spark plug cavity 6. The spark plug cavity 6 is arranged completely outside the prechamber 1. The spark plug cavity 6 thus extends outwards from the wall of the prechamber 1. The spark plug cavity 6 is configured to receive a spark plug 5. The spark plug 5 is arranged at least partly within the spark plug cavity 6. The spark plug 5 is attached with a threaded connection to the wall of the spark plug cavity 6. The spark plug 5 is configured to ignite air/fuel mixture. The spark plug 5 comprises a center electrode 24 and a side electrode 25. The side electrode 25 can be a ground electrode. The electrodes 24, 25 are arranged within the spark plug cavity 6. In the embodiment of the figures, the spark plug cavity 6 and the spark plug 5 are arranged at the second end, i.e. the upper end of the prechamber arrangement. The spark plug 5 is thus above the prechamber 1. However, the spark plug cavity 6 could also be arranged on a side of the prechamber 1. In the embodiment of the figures, the spark plug cavity 6 is a cylindrical space.

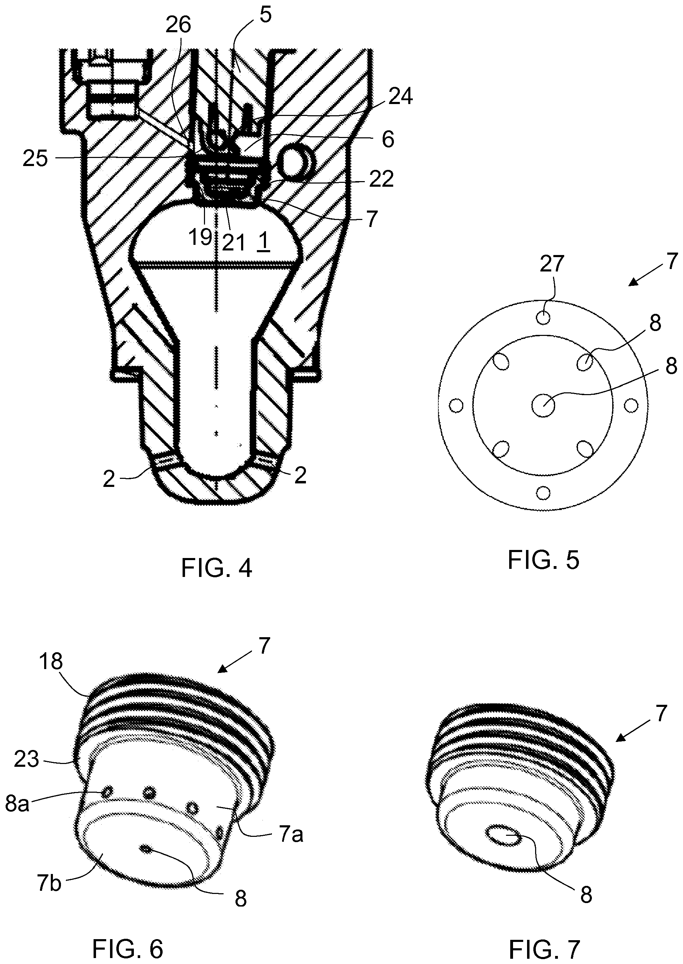

The prechamber arrangement according to the invention comprises a shield element 7. The shield element 7 separates the spark plug cavity 6 from the prechamber 1. The shield element 7 is a separate insert. It is thus separate from the spark plug 6 and not an integral part of the prechamber 1. The shield element 7 is provided with at least one nozzle hole 8, 8a. In the embodiments of figures 1 to 6, the shield element 7 comprises a plurality of nozzle holes 8, 8a. In the embodiment of figure 7, the shield element 7 is provided with a single nozzle hole 8. The nozzle holes 8, 8a establish fluid communication between the prechamber 1 and the spark plug cavity 6. The nozzle holes 8, 8a allow flow in both directions. Mixture of fuel and air can thus flow from the prechamber 1 into the spark plug cavity 6 and the ignited mixture can be discharged from the spark plug cavity 6 into the prechamber 1. The combined cross-sectional area of the nozzle holes 8, 8a of the shield element 7 is 3-15 percent of the cross-sectional area of the shield element 7 projected into a plane that is perpendicular to the axial direction of the shield element 7. The shield element 7 protects the spark plug 6 against the heat of the prechamber 1. This allows the use of cheaper spark plugs 5. The prechamber arrangement can be provided with a cooling system for cooling the components of the prechamber arrangement. The cooling system can be configured to ensure effective cooling of the shield element 7. This protects the spark plug 5 from the heat of the prechamber combustion. For instance, a cooling channel could be arranged in the area around the shield element 7.

In the embodiments of the figures, the shield element 7 has a cylindrical portion 7a and an end portion 7b closing one end of the cylindrical portion 7a. In the embodiments of the figures, the end portion 7b is flat, i.e. disc-shaped. In the embodiments of figures 1-5 and 7, the single nozzle hole 8 or all the nozzle holes 8 are arranged in the end portion 7b. Figure 6 shows a different embodiment, where part of the nozzle holes 8a are arranged along the circumference of the shield element 7, i.e. in the cylindrical portion 7a. One nozzle hole 8 is arranged in the end portion 7b. However, the end portion 7b could be provided with a plurality of nozzle holes 8. In the embodiments of the figures, the nozzle holes 8, 8a are round. However, also other shapes could be used. The nozzle holes 8, 8a could be e.g. slots, arcs, cross-shaped, branched etc.

The shield element 7 is provided with an external thread 18. The spark plug cavity 6 is provided with a corresponding internal thread 19, with which the thread 18 of the shield element 7 can be engaged. The shield element 7 is configured to be installed into the spark plug cavity 6 from upwards. The spark plug cavity 6 is provided with a shoulder 22 facing away from the prechamber 1. The shield element 7 comprises a shoulder 23, which is configured to be arranged against the shoulder 22 of the spark plug cavity 6. As shown in figures 2 and 4, an inner circumference of the shield element 7 can be provided with a shape 21 allowing engagement with a tightening tool, such as an Allen socket or a Torx socket. Part of the inner circumference of the shield element 7 can thus be for example hexagonal. Figure 5 shows an alternative way of providing the shield element 7 with a shape allowing engagement with a tightening tool. In the embodiment of figure 5, the shape 27 allowing engagement with a tightening tool is arranged on a surface facing away from the prechamber 1. In figure 5, the upper end surface of the shield element 7 is provided with holes 27, into which pins or other similar elements of a rotatable tightening tool can be inserted for rotating the shield element 7. Instead of the holes 27, a surface of the shield element 7 could be provided with grooves or other shapes allowing rotation of the shield element 7. An advantage of arranging the shapes 27 on the upper end surface or other parallel surface is that the inner shape of the shield element can be chosen more freely.

The free volume of the spark plug cavity 6 is small compared to the volume of the prechamber 1. The expression "free volume" refers to the volume between the spark plug 5 and the shield element 7, including the space within the cylindrical portion 7a of the shield element 7. The free volume is thus the gas volume delimited by the spark plug 5, the walls of the spark plug cavity 6, and the shield element 7. The free volume of the spark plug cavity 6 can be in the range of 1-20, preferably in the range of 5-15 percent of the volume of the prechamber 1.

In the embodiment of figures 1 and 2, the prechamber 1 is provided with a fuel inlet 4. The fuel inlet 4 allows forming a richer fuel/air mixture in the prechamber 1 than in the main combustion chamber 3. This is beneficial especially in lean burn engines, as the lean mixture is difficult to ignite. In the embodiment of figures 1 and 2, the fuel inlet 4 is arranged close to the upper end of the prechamber 1. The fuel inlet 4 is preferably in the upper half of the prechamber 1. The fuel is thus injected close to the spark plug cavity 6, which ensures that a rich mixture is formed around the electrodes 24, 25 of the spark plug 5. Each cylinder 10 of the engine can be provided with an own valve for controlling fuel flow into the prechamber 1 via the fuel inlet 4. In the embodiment of figures 1 and 2, no fuel inlet is arranged in the spark plug cavity 6. All the fuel is thus mixed with air before being introduced into the spark plug cavity 6.

Figure 4 shows an alternative embodiment of the invention. In the embodiment of figure 4, the spark plug cavity 6 is provided with a fuel inlet 26. This allows fuel to be injected into the spark plug cavity 6 between the spark plug 5 and the shield element 7. An advantage of this embodiment is that the spark plug 5 is cooled down. In the embodiment of figure 4, the prechamber 1 is not provided with a fuel inlet. However, it would be possible to provide both the prechamber 1 and the spark plug cavity 6 with fuel inlets.

In the embodiment of the figures, each cylinder 10 of the engine is provided with a gas admission valve 20, which is configured to introduce gaseous fuel into the intake duct 16. Part of the fuel can thus be introduced into the intake duct 16 via the gas admission valve 20. Part of the fuel is introduced into the prechamber 1 and/or into the spark plug cavity 6 via the fuel inlets 4, 26. For example, major part of the fuel can be introduced into the intake duct 16 for forming a lean mixture. By introducing fuel additionally into the prechamber 1 and/or into the spark plug cavity 6 via the fuel inlets 4, 26, a richer mixture can be formed in the prechamber 1. The rich mixture is ignited by the spark plug 5. Combustion thus starts in the prechamber 1 and continues in the main combustion chamber 3.

## Claims

1. A prechamber arrangement for a piston engine, the arrangement comprising a prechamber (1), which is provided with one or more openings (2) for establishing fluid communication between the prechamber (1) and a main combustion chamber (3), a spark plug cavity (6), which is arranged outside the prechamber (1) extending outwards from a wall of the prechamber (1), the spark plug cavity (6) being in fluid communication with the prechamber (1), and a spark plug (5), which is configured to ignite air/fuel mixture and which is arranged at least partly in the spark plug cavity (6), wherein the arrangement comprises a shield element (7), which is separate from the spark plug (5) and separates the spark plug cavity (6) from the prechamber (1) and which is provided with at least one nozzle hole (8, 8a) for establishing fluid communication between the prechamber (1) and the spark plug cavity (6), **characterized in that** the free volume of the spark plug cavity (6) between the spark plug (5) and the shield element (7) is 1-20 percent of the volume of the prechamber (1), and that the arrangement comprises a fuel inlet (26) for introducing fuel into the spark plug cavity (6).

2. An arrangement according to claim 1, wherein the shield element (7) is provided with an external thread (18) and the spark plug cavity (6) is provided with a corresponding internal thread (19) for attaching the shield element (7) to the spark plug cavity (6).

3. An arrangement according to claim 1 or 2, wherein the spark plug cavity (6) is provided with a shoulder (22) facing away from the prechamber (1) and the shield element (7) is provided with a shoulder (23) configured to be arranged against the shoulder (22) of the spark plug cavity (6).

4. An arrangement according to any of claims 1-3, wherein the shield element (7) is provided with a shape (21, 27) allowing engagement with a tightening tool.

5. An arrangement according to claim 4, wherein the shape (21) is arranged on the inner circumference of the shield element (7).

6. An arrangement according to claim 4, wherein the shape (27) is arranged on a surface facing away from the prechamber (1).

7. An arrangement according to any of the preceding claims, wherein the arrangement comprises a fuel inlet (4) for introducing fuel into the prechamber (1).

8. An arrangement according to any of the preceding claims, wherein the spark plug cavity (6) is a cylindrical space.

9. An arrangement according to any of the preceding claims, wherein the free volume of the spark plug cavity (6) between the spark plug (5) and the shield element (7) is 5-15 percent of the volume of the prechamber (1).

10. An arrangement according to any of the preceding claims, wherein the shield element (7) comprises a plurality of nozzle holes (8, 8a).

11. An arrangement according to claim 10, wherein at least some of the nozzle holes (8a) are arranged along the circumference of the shield element (7).

12. An arrangement according to any of the preceding claims, wherein the combined cross-sectional area of the nozzle holes (8, 8a) of the shield element (7) is 3-15 percent of the cross-sectional area of the shield element (7) projected into a plane that is perpendicular to the axial direction of the shield element (7).

13. A piston engine, where each cylinder (10) of the engine is provided with a prechamber arrangement according to any of the preceding claims.

## Patentansprüche

1. Vorkammeranordnung für einen Kolbenmotor, wobei die Anordnung eine Vorkammer (1) umfasst, die mit einer oder mehreren Öffnungen (2) versehen ist, um eine Fluidverbindung zwischen der Vorkammer (1) und einer Hauptverbrennungskammer (3) einzurichten, einen Zündkerzenhohlraum (6), der außerhalb der Vorkammer (1) angeordnet ist und sich von einer Wand der Vorkammer (1) nach außen erstreckt, wobei der Zündkerzenhohlraum (6) in Fluidverbindung mit der Vorkammer (1) steht, und eine Zündkerze (5), die konfiguriert ist, um ein Luft/Kraftstoff-Gemisch zu zünden, und die zumindest teilweise in dem Zündkerzenhohlraum (6) angeordnet ist, wobei die Anordnung ein Abschirmelement (7) umfasst, das von der Zündkerze (5) getrennt ist und den Zündkerzenhohlraum (6) von der Vorkammer (1) trennt und das mit zumindest einem Düsenloch (8, 8a) zum Einrichten einer Fluidverbindung zwischen der Vorkammer (1) und dem Zündkerzenhohlraum (6) versehen ist, **dadurch gekennzeichnet, dass** das freie Volumen des Zündkerzenhohlraums (6) zwischen der Zündkerze (5) und dem Abschirmelement (7) 1 - 20 Prozent des Volumens der Vorkammer (1) beträgt, und dass die Anordnung einen Kraftstoffeinlass (26) zum Einführen von Kraftstoff in den Zündkerzenhohlraum (6) umfasst.

2. Anordnung nach Anspruch 1, wobei das Abschirmelement (7) mit einem Außengewinde (18) versehen ist, und der Zündkerzenhohlraum (6) mit einem entsprechenden Innengewinde (19) zum Befestigen des Abschirmelements (7) am Zündkerzenhohlraum (6) versehen ist.

3. Anordnung nach Anspruch 1 oder 2, wobei der Zündkerzenhohlraum (6) mit einem von der Vorkammer (1) abgewandten Absatz (22) versehen ist und das Abschirmelement (7) mit einem Absatz (23) versehen ist, der konfiguriert ist, um gegen den Absatz (22) des Zündkerzenhohlraums (6) angeordnet zu sein.

4. Anordnung nach einem der Ansprüche 1 - 3, wobei das Abschirmelement (7) mit einer Form (21, 27) versehen ist, die einen Eingriff mit einem Anziehwerkzeug ermöglicht.

5. Anordnung nach Anspruch 4, wobei die Form (21) am Innenumfang des Abschirmelements (7) angeordnet ist.

6. Anordnung nach Anspruch 4, wobei die Form (27) auf einer von der Vorkammer (1) abgewandten Oberfläche angeordnet ist.

7. Anordnung nach einem der vorhergehenden Ansprüche, wobei die Anordnung einen Kraftstoffeinlass (4) zum Einführen von Kraftstoff in die Vorkammer (1) umfasst.

8. Anordnung nach einem der vorhergehenden Ansprüche, wobei der Zündkerzenhohlraum (6) ein zylindrischer Raum ist.

9. Anordnung nach einem der vorhergehenden Ansprüche, wobei das freie Volumen des Zündkerzenhohlraums (6) zwischen der Zündkerze (5) und dem Abschirmelement (7) 5 - 15 Prozent des Volumens der Vorkammer (1) beträgt.

10. Anordnung nach einem der vorhergehenden Ansprüche, wobei das Abschirmelement (7) eine Vielzahl von Düsenlöchern (8, 8a) aufweist.

11. Anordnung nach Anspruch 10, wobei zumindest einige der Düsenlöcher (8a) entlang des Umfangs des Abschirmelements (7) angeordnet sind.

12. Anordnung nach einem der vorhergehenden Ansprüche, wobei die kombinierte Querschnittsfläche der Düsenlöcher (8, 8a) des Abschirmelements (7) 3 - 15 Prozent der Querschnittsfläche des Abschirmelements (7) beträgt, die in eine Ebene projiziert wird, die senkrecht zur axialen Richtung des Abschirmelements (7) ist.

13. Kolbenmotor, bei dem jeder Zylinder (10) des Motors mit einer Vorkammeranordnung nach einem der vorhergehenden Ansprüche versehen ist.

## Revendications

1. Agencement de préchambre pour un moteur à piston, l'agencement comprenant une préchambre (1), qui est dotée d'une ou de plusieurs ouvertures (2) pour établir une communication fluidique entre la préchambre (1) et une chambre de combustion principale (3), une cavité de bougie d'allumage (6), qui est agencée à l'extérieur de la préchambre (1) s'étendant vers l'extérieur depuis une paroi de la préchambre (1), la cavité de bougie d'allumage (6) étant en communication fluidique avec la préchambre (1) et une bougie d'allumage (5), qui est configurée pour allumer un mélange air/carburant et qui est agencée au moins partiellement dans la cavité de bougie d'allumage (6), dans lequel l'agencement comprend un élément de blindage (7), qui est séparé de la bougie d'allumage (5) et sépare la cavité de bougie d'allumage (6) de la préchambre (1) et qui est doté d'au moins un trou de buse (8, 8a) pour établir une communication fluidique entre la préchambre (1) et la cavité de bougie d'allumage (6), **caractérisé en ce que** le volume libre de la cavité de bougie d'allumage (6) entre la bougie d'allumage (5) et l'élément de blindage (7) représente 1 à 20 pour cent du volume de la préchambre (1), et **en ce que** l'agencement comprend une entrée de carburant (26) pour introduire du carburant dans la cavité de bougie d'allumage (6).

2. Agencement selon la revendication 1, dans lequel l'élément de blindage (7) est doté d'un filetage externe (18) et la cavité de bougie d'allumage (6) est dotée d'un filetage interne correspondant (19) pour fixer l'élément de blindage (7) à la cavité de bougie d'allumage (6).

3. Agencement selon la revendication 1 ou 2, dans lequel la cavité de bougie d'allumage (6) est dotée d'un épaulement (22) orienté à l'opposé de la préchambre (1) et l'élément de blindage (7) est doté d'un épaulement (23) configuré pour être agencé contre l'épaulement (22) de la cavité de bougie d'allumage (6).

4. Agencement selon l'une quelconque des revendications 1 à 3, dans lequel l'élément de blindage (7) est doté d'une forme (21, 27) permettant de venir en prise avec un outil de serrage.

5. Agencement selon la revendication 4, dans lequel la forme (21) est agencée sur la circonférence intérieure de l'élément de blindage (7).

6. Agencement selon la revendication 4, dans lequel la forme (27) est agencée sur une surface orientée à l'opposé de la préchambre (1).

7. Agencement selon l'une quelconque des revendications précédentes, dans lequel l'agencement comprend une entrée de carburant (4) pour introduire du carburant dans la préchambre (1).

8. Agencement selon l'une quelconque des revendications précédentes, dans lequel la cavité de bougie d'allumage (6) est un espace cylindrique.

9. Agencement selon l'une quelconque des revendications précédentes, dans lequel le volume libre de la cavité de bougie d'allumage (6) entre la bougie d'allumage (5) et l'élément de blindage (7) représente 5 à 15 pour cent du volume de la préchambre (1).

10. Agencement selon l'une quelconque des revendications précédentes, dans lequel l'élément de blindage (7) comprend une pluralité de trous de buse (8, 8a) .

11. Agencement selon la revendication 10, dans lequel au moins certains des trous de buse (8a) sont agencés le long de la circonférence de l'élément de blindage (7) .

12. Agencement selon l'une quelconque des revendications précédentes, dans lequel la superficie de la section transversale combinée des trous de buse (8, 8a) de l'élément de blindage (7) est de 3 à 15 pour cent de la superficie de la section transversale de l'élément de blindage (7) projeté dans un plan perpendiculaire à la direction axiale de l'élément de blindage (7).

13. Moteur à piston, dans lequel chaque cylindre (10) du moteur est doté d'un agencement de préchambre selon l'une quelconque des revendications précédentes.
